# EUROPÄISCHE PATENTSCHRIFT

(11) **EP 3 649 843 B1**
(45) Veröffentlichungstag und Bekanntmachung des Hinweises auf die Patenterteilung: **05.01.2022**
(21) Anmeldenummer: 18205469.2
(22) Anmeldetag: 09.11.2018
(51) Int. Cl.: A01C 7/10, A01C 7/20

(54) **ANORDNUNG FÜR EINE SÄREIHE EINER SÄMASCHINE, SÄREIHE, SÄMASCHINE UND VERFAHREN ZUM MESSTECHNISCHEN ERFASSEN VON KÖRNERN**
ARRANGEMENT FOR A ROW UNIT OF A SOWING MACHINE, ROW UNIT, SOWING MACHINE AND METHOD FOR MEASURING AND DETECTING GRAINS
DISPOSITIF POUR UNE UNITÉ DE RANG DE SEMIS D'UN SEMOIR, UNITÉ DE RANG DE SEMIS, SEMOIR ET PROCÉDÉ DE DÉTECTION DES GRAINS

(43) Veröffentlichungstag der Anmeldung: 13.05.2020
(73) Patentinhaber: Kverneland A/S, 4353 Klepp St (NO)
(72) Erfinder: SCHUMACHER, Ferdinand, 59510 Lippetal-Oestinghausen (DE)
(74) Vertreter: Bittner, Thomas L.

(56) Entgegenhaltungen:
- EP-A2- 1 560 157
- US-A1- 2007 084 387
- US-A1- 2011 303 137
- US-B2- 8 869 629

## Beschreibung

Die Erfindung betrifft eine Anordnung für eine Säreihe einer Sämaschine, eine Säreihe sowie eine Sämaschine. Weiterhin bezieht sich die Erfindung auf ein Verfahren zum messtechnischen Erfassen von Körnern eines granulatartigen Materials beim Ausbringen von vereinzelten Körnern mittels einer Säreihe einer Sämaschine.

### Hintergrund

Für Säreihen von Sämaschinen sind Bauarten in verschiedenen Ausführungsformen bekannt, bei denen die in einem Vorratsbehälter bereitgestellten Körner eines granulatartigen Materials, zum Beispiel Saatmaterial oder Zusatzstoff wie Pestizid oder Dünger, mit Hilf einer Vereinzelungseinrichtung vereinzelt werden, beispielsweise mittels eines pneumatischen Verfahrens. Die vereinzelten Körner werden dann durch ein Transportrohr, welches auch als Fall- oder Schussrohr bezeichnet wird, zu einer Feldfurche hin ausgebracht. Hierbei kann vorgesehen sein, dass die vereinzelten Körner entlang eines Transportweges, welcher in einem in dem Transportrohr ausgebildeten Transportkanal von den Körnern durchlaufen wird, allein aufgrund der Gravitationskraft transportiert werden. Es kann vorgesehen sein, einen Luftstrom zu nutzen, um die Körner entlang des Transportweges in dem Transportrohr zur Feldfurche hin zu beschleunigen. Relevanter Stand der Technik ist EP 1 560 157 A2, US 8 869 629 B2 und US 2011/303137 A1.

### Zusammenfassung

Aufgabe der Erfindung ist es, für eine Anordnung für eine Säreihe einer Sämaschine, eine Säreihe sowie eine Sämaschine eine verbesserte Technologie anzugeben, mit der der Prozess des Ausbringens vereinzelter Körner optimiert werden kann.

Zur Lösung sind eine Anordnung für eine Säreihe einer Sämaschine, eine Säreihe sowie eine Sämaschine nach den Ansprüchen 1, 10 und 11 geschaffen. Weiterhin ist ein Verfahren zum messtechnischen Erfassen von Körnern beim Ausbringen von vereinzelten Körnern mittels einer Säreihe einer Sämaschine nach dem unabhängigen Anspruch 12 geschaffen. Ausgestaltungen sind Gegenstand von abhängigen Unteransprüchen.

Nach einem Aspekt ist eine Anordnung für eine Säreihe einer Sämaschine geschaffen. Die Anordnung weist Folgendes auf: ein Transportrohr; eine Eingangsöffnung, die an dem Transportrohr gebildet ist und über welche das Transportrohr vereinzelte Körner eines granulatartigen Materials von einer Vereinzelungseinrichtung empfangen kann; eine Ausgangsöffnung, die an dem Transportrohr gebildet ist und über welche die vereinzelten Körner das Transportrohr zum Ausbringen der vereinzelten Körner in eine Feldfurche verlassen können; einen Transportkanal, der in dem Transportrohr gebildet ist und durch den hindurch die vereinzelten Körner entlang eines Transportweges von der Eingangsöffnung zu der Ausgangsöffnung gelangen; und eine Messeinrichtung, die an dem Transportkanal gebildet und eingerichtet ist, die entlang des Transportkanals auf dem Transportweg transportierten vereinzelten Körner zu erfassen, wenn diese durch einen Erfassungsbereich der Messeinrichtung transportiert werden, welcher sich quer zum Transportweg in dem Transportkanal erstreckt. Der Erfassungsbereich ist zwischen einer ersten Messstellung, in welcher der Erfassungsbereich einen ersten Abschnitt des Transportkanals erfasst, und einer zweiten Messstellung verlagerbar, in welcher der Erfassungsbereich einen zweiten Abschnitt des Transportkanals erfasst, der von dem ersten Abschnitt verschieden ist.

Nach einem weiteren Aspekt ist ein Verfahren zum messtechnischen Erfassen von Körnern eines granulatartigen Materials beim Ausbringen von vereinzelten Körnern, zum Beispiel Saatkörnern, mittels einer Säreihe einer Sämaschine geschaffen. Das Verfahren weist Folgendes auf: Vereinzeln von Körnern eines granulatartigen Materials mittels einer Vereinzelungseinrichtung, Einbringen der vereinzelten Körner durch eine Eingangsöffnung eines Transportrohres in einem Transportkanal, welcher in dem Transportrohr angeordnet ist, Transportieren der vereinzelten Körner entlang eines Transportweges in dem Transportkanal zu einer Ausgangsöffnung des Transportrohres, wobei die vereinzelten Körner hierbei mittels einer Messeinrichtung erfasst werden, wenn die vereinzelten Körner durch einen Erfassungsbereich der Messeinrichtung transportiert werden, welcher sich quer zum Transportweg in dem Transportkanal erstreckt, Ausbringen der vereinzelten Körner durch die Ausgangsöffnung des Transportrohres und Ausbringen der vereinzelten Körner in eine Feldfurche, wobei der Erfassungsbereich der Messeinrichtung beim Erfassen der vereinzelten Körner zwischen einer ersten Messstellung, in welcher der Erfassungsbereich einen ersten Abschnitt des Transportkanals erfasst, und einer zweiten Messstellung verlagert wird, in welcher der Erfassungsbereich einen zweiten Abschnitt des Transportkanals erfasst, der von dem ersten Abschnitt verschieden ist. Der Erfassungsbereich der Messeinrichtung beim Erfassen der vereinzelten Körner wird zwischen einer ersten Messstellung, in weicher der Erfassungsbereich einen ersten Abschnitt des Transportkanals erfasst, und einer zweiten Messstellung verlagert, in welcher der Erfassungsbereich einen zweiten Abschnitt des Transportkanals erfasst, der von dem ersten Abschnitt verschieden ist.

Weiterhin sind eine Säreihe sowie eine Sämaschine mit der vorgenannten Anordnung geschaffen.

Die Verlagerung zwischen den verschiedenen Messstellungen ermöglicht es, für die Messeinrichtung eine Einstellung für oder eine Anpassung an unterschiedliche Verläufe des Transportweges für die Körner des granulatartigen Materials in dem Transportkanal vorzunehmen. Es können mehr als zwei Messstellungen vorgesehen sein.

Die Verlagerung zwischen den Messstellungen kann in Abhängigkeit von der Kornsorte erfolgen, zum Beispiel Saatkornsorte oder Düngersorte, die in der jeweiligen Anwendungssituation mittels der Säreihe auszubringen ist. Eigenschaften des Flug- oder Transportweges für die Körner der verschiedenen Kornsorten können zuvor experimentell und / oder mittels Simulation bestimmt werden. Auf diese Weise kann in Abhängigkeit von der Kornsorte oder -art festgestellt werden, in welchem Bereich des Transportkanals die Körner der jeweiligen Kornsorte den Bereich passieren, in welchem die Messeinrichtung angeordnet ist. Mittels Verlagern des Erfassungsbereichs kann dann sichergestellt werden, dass die Körner der jeweiligen Kornsorte mit optimierter Wahrscheinlichkeit den Erfassungsbereich passieren, beispielsweise etwa mittig. Den Benutzer können mehrere voreingestellte Verlagerungs- oder Messstellungen bereitgestellt werden, die je nach Kornsorte ausgewählt und eingestellt werden können. Eine kontinuierliche Verstellbarkeit entlang des Verlagerungsweges zwischen unterschiedlichen Messstellungen kann bereitgestellt sein.

Zum Ausbilden des Erfassungsbereichs der Messeinrichtung können ein Sender und ein Empfänger einander gegenüberliegend an dem Transportrohr angeordnet sein. In einer Ausgestaltung kann ein Transceiver verwendet werden, wobei vom Sender des Transceivers ausgesendete Messsignale auf der gegenüberliegenden Seite des Transportkanals an einem reflektierenden Element reflektiert werden können, um dann vom Empfänger des Transceivers empfangen zu werden.

Das Transportrohr kann ein Fallrohr sein, was bedeutet, dass bei dieser Ausgestaltung die vereinzelten Körner ausschließlich aufgrund der Gravitationskraft entlang des Transportweges in dem Transportkanal transportiert werden. Alternativ kann das Transportrohr ein Schussrohr sein, bei dem in dem Transportrohr die vereinzelten Körner ergänzend zur Gravitationskraft beschleunigt werden, insbesondere mittels eines Luftstroms der sich aus Richtung der Eingangsöffnung des Transportrohres in Richtung der Ausgangsöffnung des Transportrohres beweget. Erfindungsgemäß ist für das Verlagern des Erfassungsbereiches ein manueller oder ein Motor getriebener Verlagerungsmechanismus an der Messeinrichtung vorgesehen

In einer Ausgestaltung kann die Messeinrichtung zum Ausbilden des Erfassungsbereichs in den verschiedenen Messstellungen eine Sensorzeile aufweisen, entlang welcher zum Ausbilden der Erfassungsbereiche in den unterschiedlichen Messstellungen unterschiedliche Sensoren aktiviert und deaktiviert werden. Mittels Aktivieren und Deaktivieren unterschiedlicher Sensoren entlang der Sensorzeile wird der Erfassungsbereich zwischen der ersten und der zweiten und wahlweise weiteren Messstellungen verlagert.

Die Messeinrichtung kann in einer Richtung quer zum Transportweg verlagerbar sein. Alternativ oder ergänzend zur Verlagerung quer zum Transportweg kann eine Verlagerbarkeit des Erfassungsbereichs in Längsrichtung des Transportweges und / oder schräg hierzu vorgesehen sein.

Der erste und der zweite Abschnitt des Transportkanals können teilweise überlappen. Der erste und der zweite Abschnitte des Transportkanals, welcher in der ersten und der zweiten Messstellung von dem Erfassungsbereich erfasst werden, können sich in den Messstellungen räumlich überlappen. Alternativ kann vorgesehen sein, dass der erste und der zweite Abschnitt des Transportkanals in den beiden Messstellungen nicht überlappen.

Der Erfassungsbereich der Messeinrichtung kann den Transportkanal in einer ersten Richtung quer zum Transportweg im Wesentlichen vollständig erfassend ausgebildet sein. Eine solche Ausgestaltung ist beispielsweise dadurch implementierbar, dass ein Sender und ein Empfänger der Messeinrichtung auf einander gegenüberliegenden Seiten des Transportrohres angeordnet sind, so dass sich ein hierzwischen ausgebildeter Erfassungsbereich über den gesamten dazwischenliegenden Abschnitt des Transportkanals erstreckt. Der Transportkanal selbst bleibt frei von Elementen der Messeinrichtung und steht so vollständig für den Transport der Körner zur Verfügung, ohne dass dieser durch die Messeinrichtung behindert ist.

Mittels des Verlagerns zwischen der ersten und der zweiten Messstellung kann der Transportkanal in einer zweiten Richtung quer zum Transportweg und zur ersten Richtung im Wesentlichen vollständig von dem Erfassungsbereich der Messeinrichtung erfassbar ist. Im Fall von (nur) zwei Messstellungen für den Erfassungsbereich bedeutet dies, dass der Transportkanal entlang der zweiten Richtung nicht größer (oder kleiner) als die doppelte Breite oder Ausdehnung des Erfassungsbereichs entlang der zweiten Richtung ist.

Der Erfassungsbereich kann ein räumlicher Erfassungsbereich sein. Alternativ kann der Erfassungsbereich im Querschnitt punkt- oder linienförmig ausgebildet sein, wobei mehrere punkt- oder linienförmige Erfassungsbereiche vorgesehen sein können, beispielsweise mit Hilfe von Messelementen einer Sensorzeile mit punktförmigen Lichtquellen.

Die Messeinrichtung kann an dem Transportrohr in einem eingeschnürten Rohrabschnitt angeordnet sein, in weichem der Transportkanal eine wenigstens einseitig ausgebildet Einschnürung aufweist.

Die Messeinrichtung kann zumindest teilweise in einer außenseitigen Vertiefung an dem Transportrohr angeordnet sein. Die außenseitige Vertiefung kann im Bereich der Einschnürung des Transportkanals angeordnet sein. Die wenigstens teilweise Aufnahme der Messeinrichtung in der außenseitigen Vertiefung an dem Transportrohr unterstützt einen platzsparenden Einbau von Transportrohr mit hieran aufgenommener Messeinrichtung in einer Säreihe. In der außenseitigen Vertiefung kann beispielsweise eine Halterung der Messeinrichtung wenigstens teilweise aufgenommen sein. Bei dieser oder anderen Ausgestaltungen kann die Messeinrichtung wechselbar an dem Transportrohr angeordnet sein, so dass ein Austausch ermöglicht ist.

Die Messeinrichtung kann eine optische Messeinrichtung aufweisen. Die optische Messeinrichtung kann mit einem optischen Signalgeber gebildet sein, beispielsweise einer Kombination eines optischen Senders sowie eines zugeordneten Empfängers. Alternativ oder ergänzend kann die Messeinrichtung eine kapazitive und / oder eine induktive Messeinrichtung aufweisen.

Die vorangehend erläuterten Ausgestaltungen können im Zusammenhang mit der Säreihe, der Sämaschine und / oder dem Verfahren zum messtechnischen Erfassen von Körnern entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer Anordnung für eine Säreihe, bei der an einem Transportrohr eine Messeinrichtung angeordnet ist;
- Fig. 2: eine schematische perspektivische Darstellung der Anordnung aus Fig. 1, wobei die Messeinrichtung von dem Transportrohr gelöst ist;
- Fig. 3: eine schematische perspektivische Darstellung von Elementen der Messeinrichtung;
- Fig. 4: eine schematische Schnittdarstellung einer Anordnung für eine Säreihe mit einem Transportrohr zum Transportieren vereinzelter Körner, die von einer Vereinzelungseinrichtung empfangen werden, wobei ein Erfassungsbereich einer Messeinrichtung in einer ersten Messstellung angeordnet ist; und
- Fig. 5: eine schematische Schnittdarstellung der Anordnung aus Fig. 4, wobei der Erfassungsbereich der Messeinrichtung in einer zweiten Messstellung angeordnet ist, die von der ersten Messstellung verschieden ist.

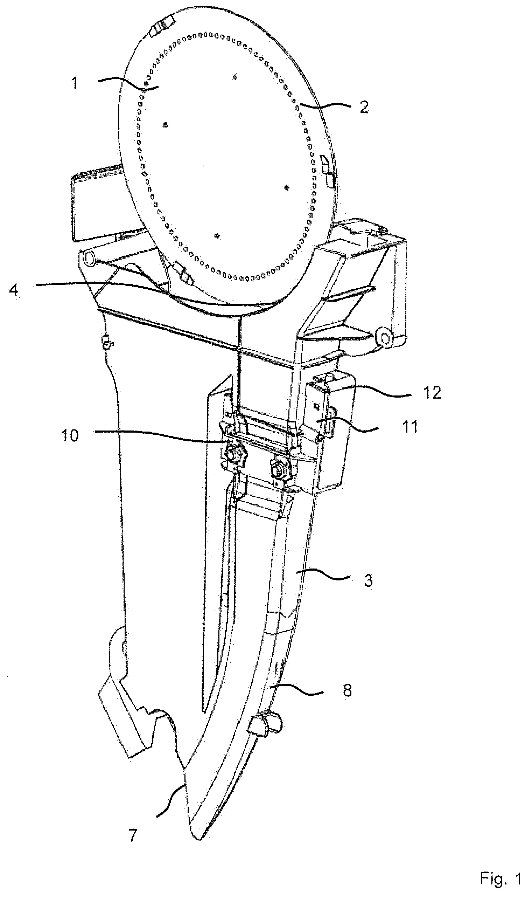

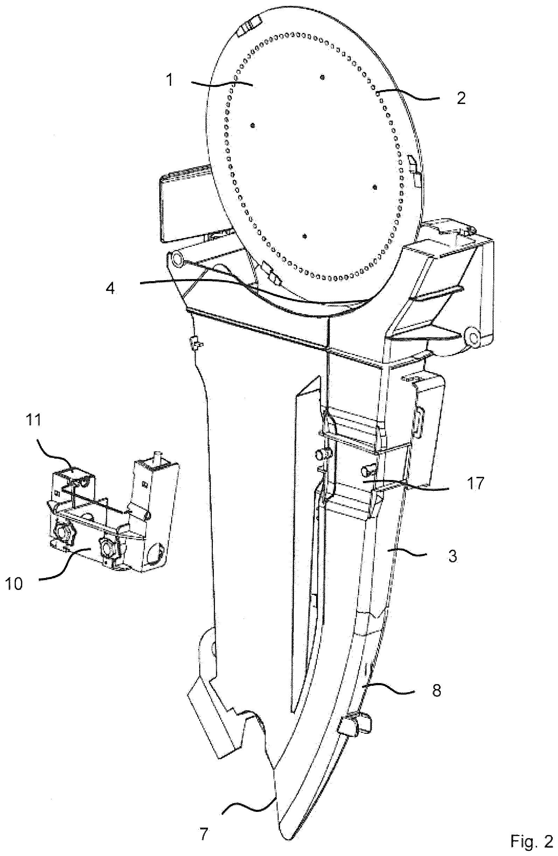

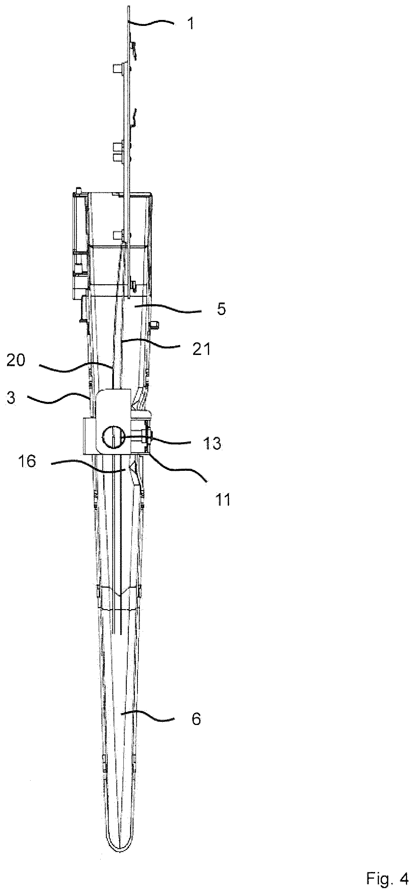

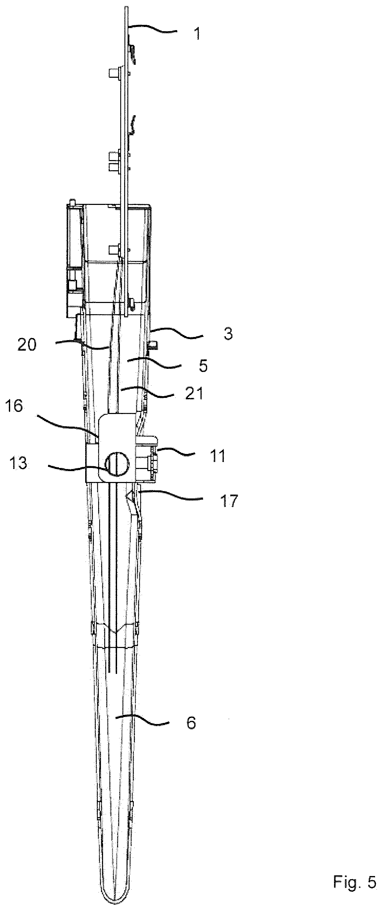

Die Fig. 1 und 2 zeigen schematische perspektivische Darstellungen einer Anordnung für eine Säreihe einer Sämaschine mit einer Vereinzelungsscheibe 1, die in einer Vereinzelungseinrichtung nutzbar ist, um in eine Feldfurche auszubringende Körner eines granulatartigen Materials zu vereinzeln, zum Beispiel Saatkörner oder Düngerkörner. Vereinzelungseinrichtungen dieser Art sind in verschiedenen Ausführungsformen als solche bekannt. Beispielsweise wird ein pneumatisch betriebenes Vereinzelungsverfahren genutzt, um einzelne Körner im Bereich von Öffnungen 2 der Vereinzelungsscheibe 1 zu halten. Die Körner werden dann zum Ausbringen in die Feldfurche von der Vereinzelungsscheibe 1 in bekannter Weise gelöst, um durch ein Transportrohr 3 nach unten zur Feldfurche transportiert zu werden. Hierbei gelangen die vereinzelten Körner durch eine Eingangsöffnung 4 des Transportrohrs 3. In dem Transportrohr 3 werden die vereinzelten Körner entlang eines Transportwegs 6, welcher in dem Transportrohr 3 entlang eines Transportkanals 5 (vgl. auch Fig. 4 und 5 unten) verläuft, zu einer Ausgangsöffnung 7 transportiert. Der Transport kann allein aufgrund der auf die Körner wirkenden Gravitationskraft erfolgen. In diesem Fall wird das Transportrohr 3 auch als Fallrohr bezeichnet. Alternativ kann vorgesehen sein, in dem Transportrohr 3 einen Luftstrom nach unten zu erzeugen, um die Körner in dem Transportkanal weiter zu beschleunigen. Dann wird auch von einem Schussrohr gesprochen.

Bei der dargestellten Ausführungsform ist das Transportrohr 3 im unteren Bereich 8 gekrümmt.

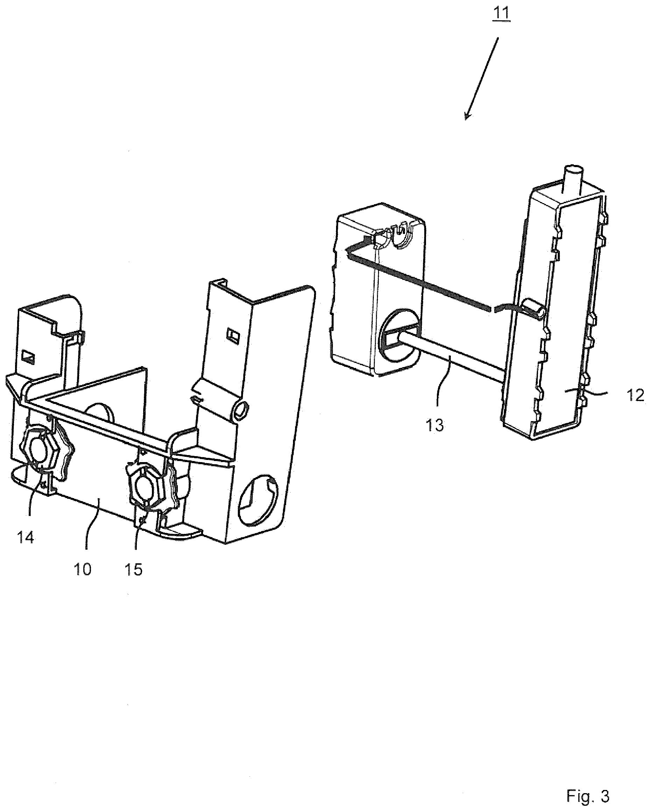

Im Bereich einer außenseitigen Vertiefung 9 des Transportrohres 3 ist eine Halte- oder Montageeinrichtung 10 einer Messeinrichtung 11 angeordnet. Gemäß Fig. 3 weist die Messeinrichtung 11 neben der Halte- oder Montageeinrichtung 10 einen Signalgeber 12 auf, der beispielsweise als ein optischer Signalgeber mit Sender 12a und Empfänger 12b gebildet ist.

Mit dem Signalgeber 12 wird ein Erfassungsbereich 13 bereitgestellt, welcher in der gezeigten Ausführungsform als räumlicher Erfassungsbereich ausgebildet ist, beispielsweise ein optischer Erfassungsbereich. Gelangt ein vereinzeltes Korn bei seinem Transport durch das Transportrohr 3 durch den Erfassungsbereich 13 wird mit Hilfe der Messeinrichtung 11 ein Messsignal bereitgestellt, welches anzeigt, dass das Korn den Erfassungsbereich 13 passiert hat, also entlang des Transportrohres 3 transportiert wurde und ausgebracht ist. Auf diese Weise können zum Beispiel die Körner bestimmt werden, die in einem Zeitabschnitt durch das Transportrohr 3 ausgebracht werden.

Die Fig. 4 und 5 zeigen schematische Schnittdarstellungen für eine Anordnung mit einem Abschnitt des Transportrohres 3 sowie der Vereinzelungsscheibe 1. Für gleiche Merkmale werden in den Fig. 4 und 5 dieselben Bezugszeichen wie in den Fig. 1 bis verwendet.

Unterschiedliche Flugkurven 20, 21 zeigen den Verlauf des Transportweges für Körner unterschiedlicher Kornsorten in dem Transportrohr 3. Die Flugkurven 20, 21 unterscheiden sich für unterschiedliche Körner, zum Beispiele Saatkörner von Mais und Saatkörner von Raps. So sind die Körner beispielsweise unterschiedliche schwer und weisen unterschiedliche äußere Formen auf.

Gemäß den Darstellungen in den Fig. 4 und 5 können der Erfassungsbereich 13 der Messeinrichtung 11 in horizontaler Richtung, also quer zum Transportweg der Körner in dem Transportrohr 3 zwischen einer ersten Messstellung in Fig. 4 und einer zweiten Messstellung in Fig. 5 verlagert werden, um so jeweils für eine der beiden Flugkurven 20, 21 optimiert eingestellt zu sein. Eigenschaften der Flugkurven 20, 21 für die unterschiedlichen Kornsorten können vorab experimentell und / oder mittels Simulation bestimmt werden. Die Messeinrichtung 11 kann dann für unterschiedliche Kornsorten jeweils vorbereitete und vom Nutzer auswählbare Messstellungen bereitstellen, die der Nutzer manuell oder über eine an die Messeinrichtung 11 angeschlossene Steuerung automatisiert auswählen und einstellen kann, wenn die jeweilige Saatkornsorte ausgebracht werden soll.

Fig. 3 zeigt hierzu Näheres für ein Beispiel einer manuellen Verstell- oder Einstellbarkeit der Messeinrichtung 11. Drehbare Stellelemente 14, 15 können vom Nutzer manuell verstellt werden, um den Erfassungsbereich 13 quer zum Transportweg 6 zu verlagern (vgl, Fig. 4 und 5). Alternativ kann ein Motor getriebener Mechanismus vorgesehen sein, um die Verlagerung des Erfassungsbereiches 13 zu bewirken.

Gemäß den Fig. 4 und 5 ist die Messeinrichtung 11 an dem Transportrohr 3 in einem Bereich angeordnet, in welchem der Transportkanal 5 eine Einschnürung 16 aufweist. Der Halte- oder Montageeinrichtung 10 der Messeinrichtung 11 ist wenigstens teilweise in einer äußeren Vertiefung 17 des Transportrohres 3 angeordnet, was eine platzsparende Bauweise unterstützt.

## Patentansprüche

1. Anordnung für eine Säreihe einer Sämaschine, mit
- einem Transportrohr (3);
- einer Eingangsöffnung (4), die in dem Transportrohr (3) gebildet ist und über welche das Transportrohr (3) vereinzelte Körner von einer Vereinzelungseinrichtung empfangen kann;
- einer Ausgangsöffnung, die in dem Transportrohr (3) gebildet ist und über welche die vereinzelten Körner das Transportrohr (3) zum Ausbringen der vereinzelten Körner in eine Feldfurche verlassen können;
- einem Transportkanal (5), der in dem Transportrohr (3) gebildet ist und durch den hindurch die vereinzelten Körner entlang eines Transportweges (6) von der Eingangsöffnung (4) zu der Ausgangsöffnung (7) gelangen; und
- einer Messeinrichtung (11), die an dem Transportkanal (5) gebildet und eingerichtet ist, die entlang des Transportkanals (5) auf dem Transportweg (6) transportierten Körner zu erfassen, wenn diese durch einen Erfassungsbereich (13) der Messeinrichtung (11) transportiert werden, welcher sich quer zum Transportweg (6) in dem Transportkanal (5) erstreckt;
wobei der Erfassungsbereich (13) zwischen einer ersten Messstellung, in welcher der Erfassungsbereich (13) einen ersten Abschnitt des Transportkanals (5) erfasst, und einer zweiten Messstellung verlagerbar ist, in welcher der Erfassungsbereich (13) einen zweiten Abschnitt des Transportkanals (5) erfasst, der von dem ersten Abschnitt verschieden ist, **dadurch gekennzeichnet, dass** zum Verlagern des Erfassungsbereiches (13) ein manueller oder ein Motor getriebener Verlagerungsmechanismus an der Messeinrichtung (11) vorgesehen ist.

2. Anordnung nach Anspruch 1, **dadurch gekennzeichnet, dass** der Erfassungsbereich (13) in einer Richtung quer zum Transportweg (6) verlagerbar ist.

3. Anordnung nach Anspruch 1 oder 2, **dadurch gekennzeichnet, dass** der erste und der zweite Abschnitt des Transportkanals (5) teilweise überlappen.

4. Anordnung nach mindestens einem der vorangehenden Ansprüche, **dadurch gekennzeichnet, dass** der Erfassungsbereich (13) der Messeinrichtung (11) den Transportkanal (5) in einer ersten Richtung quer zum Transportweg (6) im Wesentlichen vollständig erfassend ausgebildet ist.

5. Anordnung nach mindestens einem der vorangehenden Ansprüche, **dadurch gekennzeichnet, dass** mittels des Verlagerns zwischen der ersten und der zweiten Messstellung der Transportkanal (5) in einer zweiten Richtung quer zum Transportweg (6) und zur ersten Richtung im Wesentlichen vollständig von dem Erfassungsbereich (13) der Messeinrichtung (11) erfassbar ist.

6. Anordnung nach mindestens einem der vorangehenden Ansprüche, **dadurch gekennzeichnet, dass** der Erfassungsbereich (13) ein räumlicher Erfassungsbereich (13) ist.

7. Anordnung nach mindestens einem der vorangehenden Ansprüche, dadurch g e - **kennzeichnet**, dass die Messeinrichtung (11) an dem Transportrohr (3) in einem eingeschnürten Rohrabschnitt angeordnet ist, in welchem der Transportkanal (5) eine wenigstens einseitig ausgebildete Einschnürung aufweist.

8. Anordnung nach mindestens einem der vorangehenden Ansprüche, **dadurch gekennzeichnet, dass** die Messeinrichtung (11) zumindest teilweise in einer außenseitigen Vertiefung an dem Transportrohr (3) angeordnet ist.

9. Anordnung nach mindestens einem der vorangehenden Ansprüche, **dadurch gekennzeichnet, dass** die Messeinrichtung (11) eine optische Messeinrichtung aufweist.

10. Säreihe für eine Sämaschine, mit einer Anordnung nach mindestens einem der vorangehenden Ansprüche.

11. Sämaschine, mit mindestens einer Säreihe nach Anspruch 10.

12. Verfahren zum messtechnischen Erfassen von Körnern beim Ausbringen von vereinzelten Körnern mittels einer Säreihe einer Sämaschine, mit:
- Vereinzeln von Körnern mittels einer Vereinzelungseinrichtung;
- Einbringen der vereinzelten Körner durch eine Eingangsöffnung (4) eines Transportrohres (3) in einem Transportkanal (5), welcher in dem Transportrohr (3) angeordnet ist;
- Transportieren der vereinzelten Körner entlang eines Transportweges (6) in dem Transportkanal (5) zu einer Ausgangsöffnung (7) des Transportrohres (3), wobei die vereinzelten Körner hierbei mittels einer Messeinrichtung (11) erfasst werden, wenn die vereinzelten Körner durch einen Erfassungsbereich (13) der Messeinrichtung (11) transportiert werden, welcher sich quer zum Transportweg (6) in dem Transportkanal (5) erstreckt;
- Ausbringen der vereinzelten Körner durch die Ausgangsöffnung (7) des Transportrohres (3) und
- Ausbringen der vereinzelten Körner in eine Feldfurche;
wobei der Erfassungsbereich (13) der Messeinrichtung (11) beim Erfassen der vereinzelten Körner zwischen einer ersten Messstellung, in welcher der Erfassungsbereich (13) einen ersten Abschnitt des Transportkanals (5) erfasst, und einer zweiten Messstellung verlagert wird, in welcher der Erfassungsbereich (13) einen zweiten Abschnitt des Transportkanals (5) erfasst, der von dem ersten Abschnitt verschieden ist, **dadurch gekennzeichnet, dass** zum Verlagern des Erfassungsbereiches (13) ein manueller oder ein Motor getriebener Verlagerungsmechanismus an der Messeinrichtung (11) vorgesehen ist.

## Claims

1. An arrangement for a sowing row of a sowing machine, having
- a transport pipe (3);
- an input opening (4) formed in the transport pipe (3) through which input opening the transport pipe (3) can receive separated grains from a separating device;
- an output opening formed in the transport pipe (3) through which output opening the separated grains can exit the transport pipe (3) to apply the separated grains in a furrow on a field;
- a transport channel (5) formed in the transport pipe (3) through which transport channel the separated grains pass along a transport path (6) from the input opening (4) to the output opening (7); and
- a measuring device (11) formed on the transport channel (5) and configured to detect the grains transported along the transport channel (5) on the transport path (6) when they are transported through a detection region (13) of the measuring device (11), which extends transversely to the transport path (6) in the transport channel (5);
wherein the detection region (13) is displaceable between a first measuring position in which the detection region (13) covers a first portion of the transport channel (5), and a second measuring position, in which the detection region (13) covers a second portion of the transport channel (5), which is different from the first section, **characterized in that** a manual or a motor-driven displacing mechanism is provided on the measuring device (11) for displacing the detection region (13).

2. The arrangement according to claim 1, **characterized in that** the detection region (13) is displaceable in a direction which is transverse to the transport path (6).

3. The arrangement according to claim 1 or 2, **characterized in that** the first and the second portion of the transport channel (5) partially overlap.

4. The arrangement according to at least one of the preceding claims, **characterized in that** the detection region (13) of the measuring device (11) is designed such that the detection region (13) essentially completely covers the transport channel (5) in a first direction transverse to the transport path (6).

5. The arrangement according to at least one of the preceding claims, **characterized in that**, the transport channel (5) is essentially completely coverable by the detection region (13) of the measuring device (11) in a second direction which is transverse to the transport path (6) and to the first direction by means of displacement between the first and the second measuring position.

6. The arrangement according to at least one of the preceding claims, **characterized in that** the detection region (13) is a spatial detection region (13).

7. The arrangement according to at least one of the preceding claims, **characterized in that** the measuring device (11) is arranged on the transport pipe (3) in a constricted pipe portion, in which pipe portion the transport channel (5) has a constriction formed on at least one side.

8. The arrangement according to at least one of the preceding claims, **characterized in that** the measuring device (11) is at least partially arranged in an external recess on the transport pipe (3).

9. The arrangement according to at least one of the preceding claims, **characterized in that** the measuring device (11) has an optical measuring device.

10. A sowing row for a sowing machine, having an arrangement according to at least one of the preceding claims.

11. A sowing machine having at least one sowing row according to claim 10.

12. A method for detecting grains by means of measurement technology during the application of separated grains by means of a sowing row of a sowing machine, comprising:
- separating grains by means of a separating device;
- feeding the separated grains through an input opening (4) of a transport pipe (3) into a transport channel (5), which is arranged in the transport pipe (3);
- transporting the separated grains along a transport path (6) in the transport channel (5) to an output opening (7) of the transport pipe (3), wherein the separated grains are detected by means of a measuring device (11) when the separated grains are transported through a detection region (13) of the measuring device (11), which detection region extends transversely to the transport path (6) in the transport channel (5);
- outputting the separated grains through the output opening (7) of the transport pipe (3) and
- applying the separated grains in a furrow;
wherein, while detecting the separated grains, the detection region (13) of the measuring device (11) is displaced between a first measuring position, in which the detection region (13) covers a first portion of the transport channel (5), and a second measuring position, in which the detection region (13) covers a second portion of the transport channel (5), which is different from the first section, **characterized in that** a manual or a motor-driven displacing mechanism is provided on the measuring device (11) for displacing the detection region (13).

## Revendications

1. Agencement pour une ligne de semis d'un semoir, comprenant
- un tube de transfert (3) ;
- un orifice d'entrée (4), qui est créé dans le tube de transfert (3) et par l'intermédiaire duquel le tube de transfert (3) est susceptible de réceptionner des graines désolidarisées à partir d'un dispositif de désolidarisation ;
- un orifice de sortie, qui est créé dans le tube de transfert (3) et par l'intermédiaire duquel des graines désolidarisées peuvent quitter le tube de transfert (3), pour l'épandage des graines désolidarisées dans un sillon :
- un conduit de transfert (5), qui est créé dans le tube de transfert (3) et à travers lequel les graines désolidarisées arrivent le long d'un trajet de transfert (6) de l'orifice d'entrée (4) vers l'orifice de sortie (7) ; et
- un dispositif de mesure (11), qui est créé sur le conduit de transfert (5) et qui est aménagé pour détecter les graines transférées le long du conduit de transfert (5) sur le trajet de transfert (6), lorsque celles-ci sont transférées à travers une zone de détection (13) du dispositif de mesure (11), laquelle s'étend à la transversale du trajet de transfert (6) dans le conduit de transfert (5) ;
la zone de détection (13) étant déplaçable entre une première position de mesure, dans laquelle la zone de détection (13) détecte un premier tronçon du conduit de transfert (5) et une deuxième position de mesure, dans laquelle la zone de détection (13) détecte un deuxième tronçon du conduit de transfert (5), qui est différent du premier tronçon, **caractérisé en ce que** pour déplacer la zone de détection (13), il est prévu sur le dispositif de mesure (11) un mécanisme de déplacement manuel ou actionné par moteur.

2. Agencement selon la revendication 1, **caractérisé en ce que** la zone de détection (13) est déplaçable dans une direction transversale au trajet de transfert (6).

3. Agencement selon la revendication 1 ou 2, **caractérisé en ce que** le premier et le deuxième tronçon du conduit de transfert (5) se chevauchent partiellement.

4. Agencement selon au moins l'une quelconque des revendications précédentes, **caractérisé en ce que** la zone de détection (13) du dispositif de mesure (11) est conçue de sorte à détecter essentiellement complètement le conduit de transfert (5) dans une première direction transversale au trajet de transfert (6).

5. Agencement selon au moins l'une quelconque des revendications précédentes, **caractérisé en ce que**, par le déplacement entre la première et la deuxième position de mesure, le conduit de transfert (5) est détectable essentiellement complètement par la zone de détection (13) du dispositif de mesure (11) dans une deuxième direction transversale au trajet de transfert (6) et à la première direction.

6. Agencement selon au moins l'une quelconque des revendications précédentes, **caractérisé en ce que** la zone de détection (13) est une zone de détection (13) spatiale.

7. Agencement selon au moins l'une quelconque des revendications précédentes, **caractérisé en ce que** le dispositif de mesure (11) est placé sur le tube de transfert (3) dans un tronçon de tube rétréci, dans lequel le conduit de transfert (5) comporte un rétrécissement conçu au moins unilatéralement.

8. Agencement selon au moins l'une quelconque des revendications précédentes, **caractérisé en ce que** le dispositif de mesure (11) est placé au moins partiellement dans un creux externe sur le tube de transfert (3).

9. Agencement selon au moins l'une quelconque des revendications précédentes, **caractérisé en ce que** le dispositif de mesure (11) comporte un dispositif de mesure optique.

10. Ligne de semis pour un semoir, comprenant un agencement selon au moins l'une quelconque des revendications précédentes.

11. Semoir, comprenant au moins une ligne de semis selon la revendication 10.

12. Procédé, destiné à la détection métrologique de graines, lors de l'épandage de graines désolidarisées au moyen d'une ligne de semis d'un semoir, comprenant les étapes suivantes :
- désolidariser des graines au moyen d'un dispositif de désolidarisation ;
- introduire les graines désolidarisées à travers un orifice d'entrée (4) d'un tube de transfert (3) dans un conduit de transfert (5), lequel est placé dans le tube de transfert (3) ;
- transférer les graines désolidarisées le long d'un trajet de transfert (6) dans le conduit de transfert (5) vers un orifice de sortie (7) du tube de transfert (3), à cet effet, les graines désolidarisées étant détectées au moyen d'un dispositif de mesure (11) lorsque les graines désolidarisées sont transférées à travers une zone de détection (13) du dispositif de mesure (11), laquelle s'étend à la transversale du trajet de transfert (6) dans le conduit de transfert (5) ;
- épandre les graines désolidarisées à travers l'orifice de sortie (7) du tube de transfert (3), et
- épandre les graines désolidarisées dans un sillon ;
lors de la détection des graines désolidarisées, la zone de détection (13) du dispositif de mesure (11) étant déplacée entre une première position de mesure, dans laquelle la zone de détection (13) détecte un premier tronçon du conduit de transfert (5) et une deuxième position de mesure, dans laquelle la zone de détection (13) détecte un deuxième tronçon du conduit de transfert (5) qui est différent du premier tronçon, **caractérisé en ce que** pour déplacer la zone de détection (13), il est prévu sur le dispositif de mesure (11) un mécanisme de déplacement manuel ou actionné par moteur.
